Europäisches Patentamt

European Patent Office

Office européen des brevets

(11) Publication number: **0 199 406**
**B1**

## (12) EUROPEAN PATENT SPECIFICATION

(45) Date of publication of patent specification: **18.10.89**

(21) Application number: **86200598.0**

(22) Date of filing: **09.04.86**

(51) Int. Cl.⁴: **A 01 B 49/06,** A 01 B 49/02,
A 01 B 59/048, A 01 B 3/42,
A 01 B 3/46, A 01 B 15/14

(54) **A plough.**

(30) Priority: **11.04.85 NL 8501065**
**11.04.85 NL 8501066**

(43) Date of publication of application:
**29.10.86 Bulletin 86/44**

(45) Publication of the grant of the patent:
**18.10.89 Bulletin 89/42**

(84) Designated Contracting States:
**DE FR GB NL**

(56) References cited:
**CH-A- 333 812**
**FR-A-1 242 378**
**FR-A-1 257 784**
**FR-A-1 521 767**
**FR-A-1 597 138**
**FR-A-2 180 520**
**FR-A-2 512 628**
**FR-A-2 549 339**
**US-A-3 224 392**
**US-A-4 141 419**

(73) Proprietor: **C. van der Lely N.V.**
**Weverskade 10 P.O. Box 26**
**NL-3155 ZG Maasland (NL)**

(72) Inventor: **van der Lely, Cornelis**
**7 Brüschenrain**
**Zug (CH)**

(74) Representative: **Mulder, Herman et al**
**Octrooibureau Van der Lely N.V. Weverskade 10**
**P.O. Box 26**
**NL-3155 ZG Maasland (NL)**

Courier Press, Leamington Spa, England.

## Description

The invention relates to a plough comprising a frame and a plurality of plough bodies fitted thereto, said plough constituting a combination with a crumbling device as well as a sowing machine, and which plough can be connected to a tractor in such a manner that, during operation, a tractor wheel is situated in the furrow.

A plough of this kind is known from the French Patent 2,549,339. With this known construction the crumbling device is afforded by a so called vibrating harrow, which during operation, is able to work a strip of soil with a width, that more or less corresponds with the width of the strip of soil worked by the plough bodies. Hereby soil can easily be stowed into the furrow, which results in a seed bed with an uneven surface. Moreover the soil that is broght into the furrow will be compressed by the tractor wheels so that lumps of compressed soil remain in the seed bed, this being also undesirable. The construction according to the invention seeks to avoid the abovementioned disadvantages by providing a plough of the kind set forth, characterized in that the crumbling device comprises a plurality of soil working members, which are arranged side by side in a row extending transverse to the direction of travel and which are adapted to rotate about upwardly directed axes and in that the crumbling device at the end of the row comprises a side screen, which by means of height adjustable arms can be brought to into a furrow, the arrangement being such that an uppermost portion of the said side screen is situated at least substantially vertical and in that in the highest position of the side screen a lower portion co-operates with the outermost soil working members. With this construction is achieved, that no soil is stowed into the open furrow, whereas the other plate passes over the already cultivated soil, whereby it assumes a position, in which the side screen stands practically vertical and can operate with the outermost soil working member for a further crumbling and distribution of the soil, so that a proper link-up is obtained with the adjacent already cultivated strip of soil.

For a better understanding of the invention and to show how the same may be carried into effect, reference will now be made, by way of example, to the accompanying drawings, in which:

Figure 1 is a side view of a plough according to the invention, the front part of the plough being arranged at the front side of a tractor and the rear part at the rear side thereof;

Figure 2 is, to an enlarged scale, a view in the direction indicated by arrow II in Figure 1;

Figure 3 is a view on the line III—III in Figure 2;

Figure 4 is a view on the line IV—IV in Figure 2;

Figure 5 is, to an enlarged scale, a view in the direction indicated by arrow V in Figure 1;

Figure 6 is a view in the direction indicated by arrow VI in Figure 5;

Figure 7 is a view on the line VII—VII in Figure 5, and

Figure 8 is a view on the line VIII—VIII in Figure 7.

The apparatus shown in the Figures concerns a plough consisting of two parts 1 and 2 cooperating during operation, which parts by means of a three-point hitch attachment are attached to the front side and rear side, respectively, of a tractor 3. The front part 1 of the plough comprises an at least substantially horizontal frame beam 4 extending transverse to the direction of travel A and being provided at each of its ends with an arm 5, the longitudinal centre line of which includes an angle of ±50° with the longitudinal centre line of said frame beam. The arms 5 are situated at the same side of the frame beam 4 and extend from the frame beam 4 rearwardly and slightly downwardly (Figure 3).

By means of an upwardly, preferably vertically, extending swivel shaft 6 there is arranged at the ends of each of the arms 5 an at least substantially horizontal frame beam 7 extending substantially in the direction of travel.

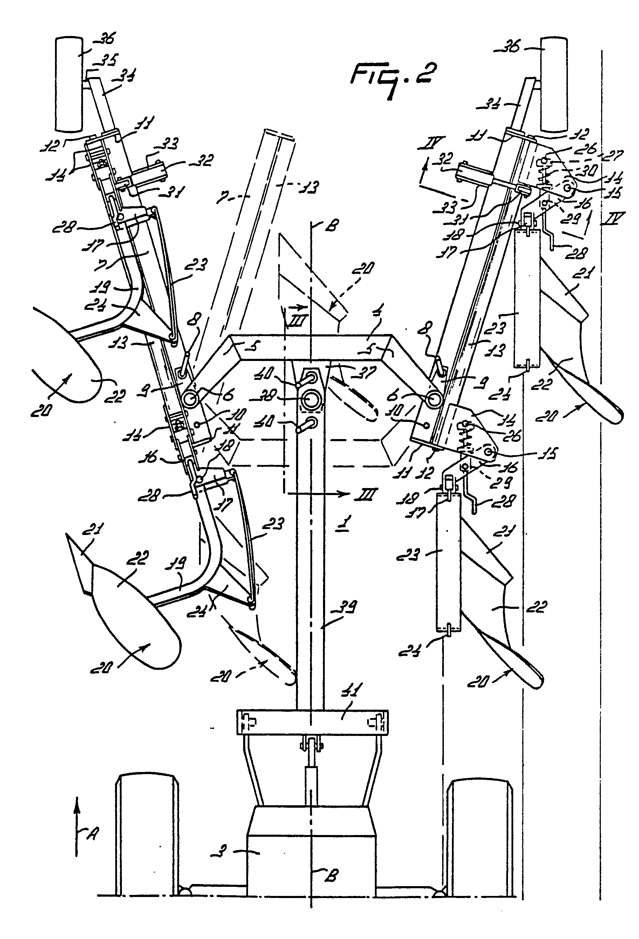

As is apparent from Figure 2, a swivel shaft 6 is situated near an end of the frame beam 7. By means of a pin 8, which can be passed through a lip 9 on the arm 5 and one of two holes 10 provided in the frame beam 7, each frame beam 7 can be secured in two positions distorted over 180° relative to the arm for bringing the plough in working positions, which will be discussed in more detail hereafter. In the position indicated in Figure 2 by uninterrupted lines, the frame beams 7 are arranged mirror image-wise relative to each other in respect of a vertical plane of symmetry B—B through the centre of the frame beam 4 and the tractor 3. The frame beams 7 diverge forwardly whereby their longitudinal centre lines include an angle of ±30° with the plane of symmetry.

At its ends, each of the frame beams 7 is provided with a lip 11 which, in the position of the beams indicated by uninterrupted lines, is directed outwardly. Each of the lips 11 constitutes a bearing for a pivot pin 12 which is situated at the end of a carrier 13. Each carrier 13 is arranged rotatably about its longitudinal axis between the lips 11 and extends at least substantially parallel to the frame beam 7. At its ends, each carrier 13 is provided with plate-shaped supports 14 which are located above each other and, seen from above, are substantially triangular in shape.

Between the ends of the supports 14 facing away from the carrier 13 there is arranged by means of a shaft 15 extending substantially parallel to the shaft 6 an arm 16, which is constituted by two strips located above each other and extending in the direction of the carrier 13 and obliquely rearwardly, as is apparent from Figure 2. At the end of each arm 16 facing away from the supports 14 there is provided between the strip-shaped portions a pair of upwardly directed lugs 17. By means of a shaft 18 there is arranged between the lugs 17 an arm 19 adapted for pivotal movement. In the working position, an arm 19 assumes the position indicated in Figure 3.

In this position, the arm 19 extends over a part at least substantially horizontally to the rear and at least substantially in the direction of travel A. The said part of the arm 19 merges via a curve into a straightly downwardly directed part which again merges into an obliquely forwardly and downwardly directed part that carries a plough body 20.

Each plough body 20 is provided with a share 21 and a mouldboard 22 connected thereto. At the top side of the lugs 17 there is arranged pivotably an end of a leaf spring 23, the other end of which is arranged pivotably at the rear side of the rearwardly extending part of the arm 19 by means of a lug 24. With its broadest side, the spring 23 is located at least substantially parallel to the top side of the arm 19 (Figure 3) and keeps the arm against an abutment 25 which is situated at the bottom side of the lugs 17. By means of a pin 26, which extends at least substantially parallel to the shaft 15, between the supports 14 there is arranged pivotably a support portion 27. In the support portion 7 an end of a screw spindle 28 is supported. The screw spindle is adapted to co-operate with a sleeve 29, which is arranged pivotably between the strips of the arm 16 (Figure 2). Between the support portion 27 and the sleeve 29 there is provided around the screw spindle 28 a pressure spring 30, all this in such a manner that by turning the screw spindle the tension in the spring can be controlled along with a pivotal movement of the strip-shaped arm 16. Just behind the frontmost supports 14, each carrier 13 is provided with a lug 31, to which is arranged pivotably by means of a pin an end of an adjusting cylinder 32 which, by means of a pin, with its other end is arranged pivotably between lugs 33 attached to the frame beam 7.

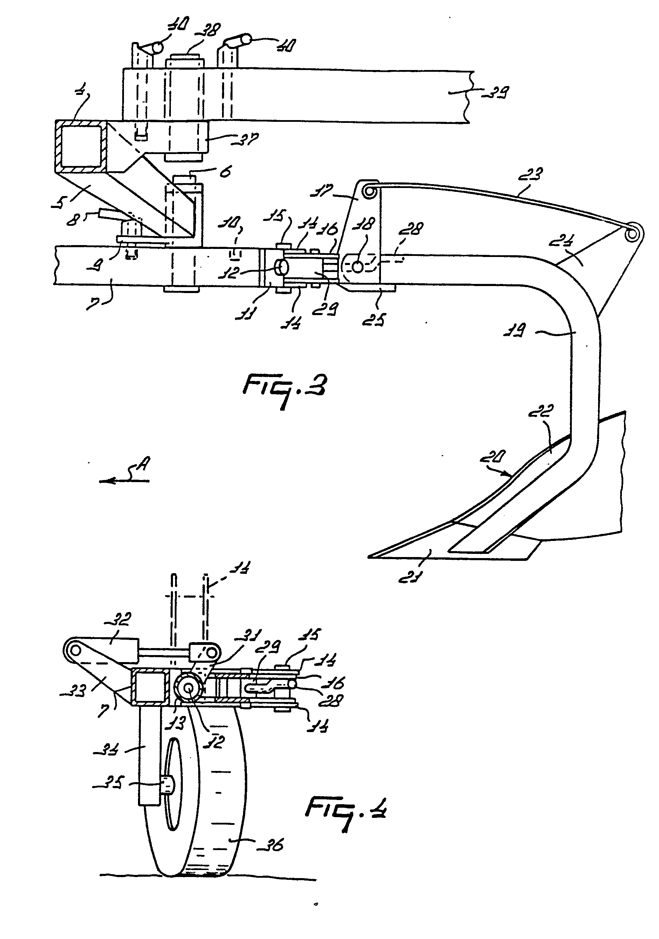

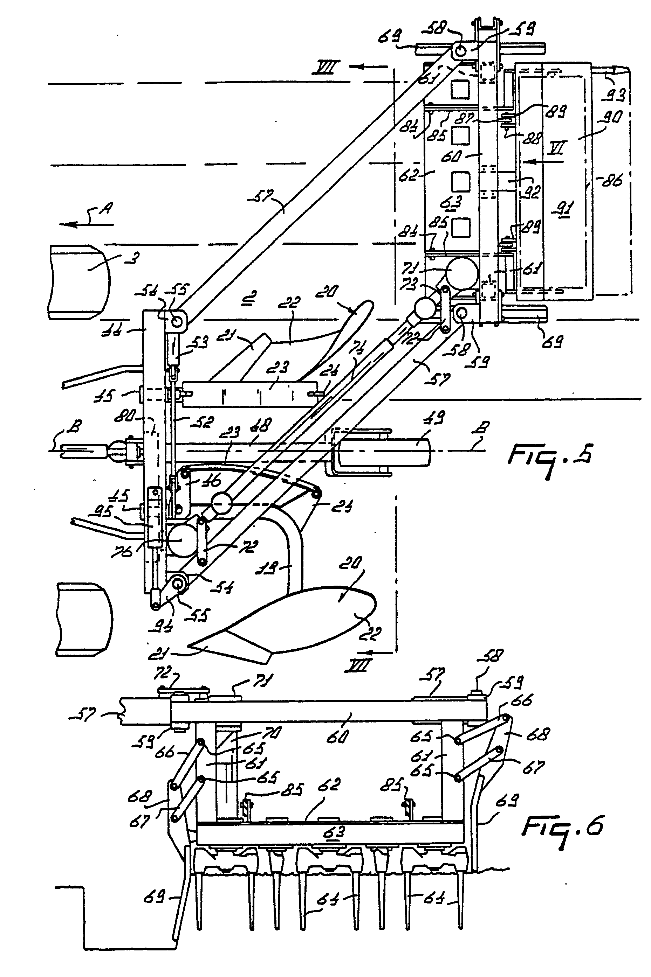

The front side of each frame beam 7 is provided with an obliquely downwardly and forwardly directed arm 34, which at its bottom end comprises an at least substantially horizontally extending transverse shaft 35, around which a ground wheel 36 is freely rotatable (Figure 4). In the position indicated in Figure 2 by uninterrupted lines, near its centre the frame beam 4 is provided at the rear side with a support 37. The support 37 is provided with an at least substantially vertical swivel shaft 38. About the swivel shaft 38 is pivotable the end of a frame beam 39 which extends parallel to the direction of travel A and of which the longitudinal centre line is situated in the plane of symmetry B—B. By means of a pin 40, it is possible to bring the frame beam 4 relative to the frame beam 39 by distortion about the shaft 38 into the position indicated by dash lines in Figure 2. The rear end of the frame beam 39 is connected to the top side of a triangular trestle 41, which triangular trestle comprises a three-point attachment for coupling to the three-point hitch attachment at the front side of the tractor.

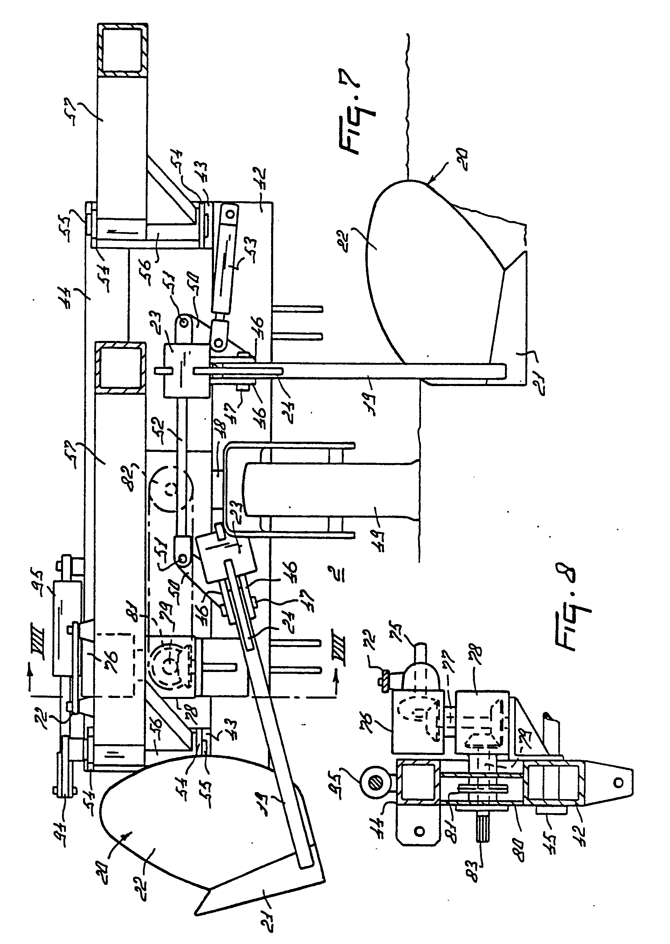

Part 2 of the plough, which during operation is situated behind the tractor, comprises an at least substantially horizontal frame beam 42 extending transverse to the direction of travel A and being provided at its ends with vertically extending beams 43 (Figure 7). At their top sides, the beams 43 are connected with each other by means of a beam 44 extending parallel to the frame beam 42. On either side of the centre in a point which is situated ±1/4 of the length of the beam from its ends, there is bearing-supported in the beam 42 a shaft 45 extending in the direction of travel A (Figure 5). At its rear side, each shaft 45 is provided with two spaced, upwardly extending lips 46. Between each pair of lips 46 there is arranged by means of a pivot shaft 47 extending transverse to the direction of travel A an arm 19 for a plough body 20 (Figure 7).

As has been described before, each arm 19 is provided with a leaf spring 23 which counteracts a pivotal movement of the arm about the shaft 47 and attempts to keep this arm against an abutment.

At the rear side of the frame beam 42 there is fitted near its centre an arm 48 extending rearwardly and carrying a ground wheel 49.

The lips 46 of a pair are each provided with an obliquely upwardly and outwardly extending lug 50. By means of a pin 51 extending in the direction of travel A, each lug 50 is pivotably connected with a rod 52 extending transverse to the direction of travel A (Figure 7). A the support 50 on the upper lip 46 of the—seen in the direction of travel—right-hand pair of lips there is pivotably attached an end of a hydraulic cylinder 53. With its other end, the adjusting cylinder 53 is fitted near an end of the frame beam 42. At the rear side of the beam 44 and near the bottom side of the beams 43 there is arranged a horizontal lip 54 extending rearwardly. In the lips 54, a vertical shaft 55 is pivotable. Between the lips 54, the shaft 55 is surrounded by a sleeve 56 rigidly connected to the shaft. Near the top side, there is attached to each sleeve 56 a box-like carrier beam 57 which extends rearwardly. Between the bottom side of each carrier beam 57 and the sleeve 56 there is present a support. By means of shafts 58 situated parallel to the shafts 55, the ends of the carrier beams 57 are arranged pivotably between lips 59 located at the front side of a frame beam 60 extending transverse to the direction of travel A. The frame beam 60 connects the ends of vertically downwardly extending beams 61 (Figure 6). The beams 61 are arranged at the top side of a box-like frame portion 62 which constitutes part of an implement 63, which is constructed as a rotary harrow and by means of which the soil, cultivated by the afore-mentioned plough bodies 20, can be crumbled.

The upwardly extending beams 61 are fitted at the ends and the rear side of the box-like frame portion 62.

Inside the box-like frame portion 62, the upwardly, preferably vertically, extending shafts of five soil working members 64 are bearing-supported side by side equally interspaced at preferably 25 centimeters. Each of the soil working members 64 comprises an at least substantially horizontal carrier fitted onto the end of its shaft projecting below the frame portion, which carrier, near its ends, is provided with downwardly extending soil working members in the form of tines. By means of vertically spaced pivot points 65, there are arranged to each of the upright beams 61 arms 66 and 67. The lower arm 67 is shorter than the upper arm 66. With their other ends, the arms 66 and 67 are connected pivotably to an upwardly extending support 68. The support 68, which is preferably U-shaped, is so arranged that the legs of the U are directed outwardly. The other side of each support 68 is attached near the centre to the top side of a plate 69. The top side of the plate 69, which extends at least substantiallqpparallel to the direction of travel A, is bent over slightly outwardly and via a bend merges into a downwardly extending portion which in the topmost position of the arms (66 and 67) is situated at least substantially vertically (see Figure 6). In the lowermost position of the arms 66 and 67, the top side of the plate 61 extends at least substantially vertically, while the part of the plate situated thereunder assumes a position which is directed slightly obliquely downwardly and outwardly, all this in such a manner that, as has been indicated in Figure 6 for the left-hand plate 69, during operation the plate can move along the vertical side of the furrow. Inside the box-like frame portion 62, on each of the shafts of a soil working member 64 there is fitted a straight-toothed gearwheel, all this in such a manner that the gearwheels of adjacent soil working members are in driving connection with each other. The, seen in the direction of travel, leftmost shaft of a soil working member 64 is extended upwardly, which shaft is passed through a tube 70 situated on the top side of the frame portion 62. The tube 70 is arranged at the bottom side of a gear box 71. By means of an arm 72, the gear box 71 is pivotably connected with a carrier beam 57 and rotatable about an axis which coincides with the longitudinal centre line of the shaft arranged inside said tube. Inside the gear box, the shaft arranged in the tube 70—of which shaft the longitudinal centre line is aligned with the longitudinal centre lines of the shafts 58 (Figure 5)—is in connection with a shaft 73 via a conical gear transmission. Outside the gear box 71, the shaft 73 is connected with a shaft 74 provided with universal couplings. The other end of the shaft 74 is connected with a shaft 75 in a gear box 76 which, in the same manner as the gear box 71, is pivotably connected with the front end of a carrier beam 57 by means of an arm 72. The arms 72 constitute part of a parallelogram construction. The gear box 76 is pivotable about the longitudinal centre line of a shaft 77 which, via a conical gear transmission in a gear box 78, is in connection with a shaft 79. The gear box 78 is attached to the frame beam 42. The shaft 79 is bearing-supported in a gear case 80, inside which on the shaft there is arranged a sprocket wheel 81, around which is thrown a chain which is also thrown around a sprocket wheel 82. The sprocket wheel 82 is fitted on a shaft 83 extending in the direction of travel A and being connectable with the power take-off shaft of a tractor by means of an intermediate shaft.

At a distance from each of the ends, the box-like frame portion 62 is provided at its front side with pins 84 extending transverse to the direction of travel A, around which pins are pivotable rearwardly extending arms 85, which near the rear side of the box-like frame portion by means of an adjusting device can be brought and fixed in several positions in a manner not shown.

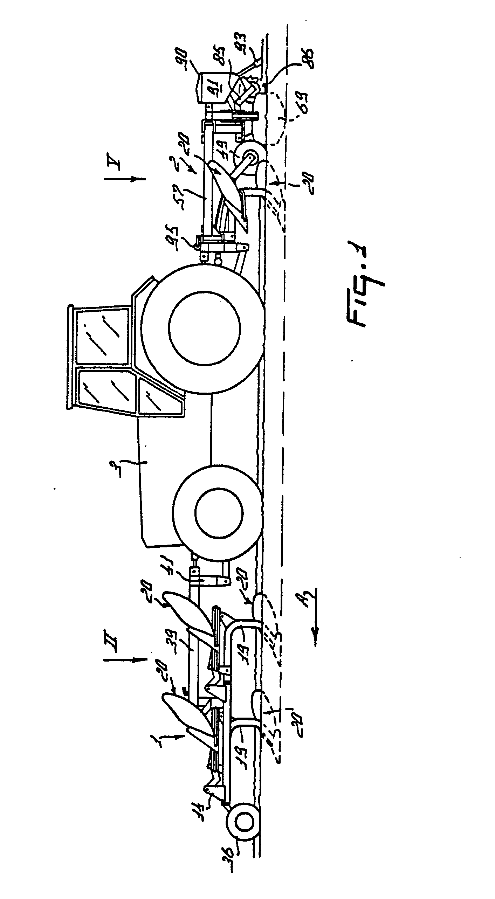

Between the sideways displaced ends of the arms 85 (Figure 5) there is arranged freely rotatably a roller 86, which in this embodiment is constructed as a packer roller. At its rear side, the frame beam 60 is on either side of the centre provided with a lip 87, which by means of a pin 88 is arranged pivotably between pairs of lips 89. The lips 89 are situated at the front side of a hopper 90, extending transverse to the direction of travel A, of an apparatus 91 for bringing material, e.g. sowing seed, onto or into the soil. The bottom side of the hopper 90 rests on a support 92 which is situated near the centre of the lowermost frame beam 42. In a manner not shown, the hopper 90 is provided with a mechanism for discharging the material via tubes 93 connected to the bottom side of the hopper, which tubes, as is apparent from Figure 1, extend at least to the ground level.

The shaft 55 situated at the front side, seen in the direction of travel A to the left, is at the top side provided with an arm 94 which extends in the longitudinal direction of the carrier beam 57 forwardly and at its front end is pivotably connected with an end of a hydraulic cylinder 951, which with its other end is arranged pivotably on the top side of the frame beam 44.

The working of the above-described plough, which consists of a part 1 in front of the tractor and a part 2 therebehind and which is constructed as a reversible plough for a reciprocating ploughing operation, is as follows:

During operation, during which the tractor 3 together with the parts 1 and 2 is moved in a direction according to arrow A, the plough bodies 20, seen in the direction of travel to the left of the plane of symmetry B—B through the longitudinal centre of the tractor, are situated in the position indicated in Figures 1, 2 and 5, whereby the working depth is determined by the ground wheels 36 and 49 which—although not shown-—can be arranged adjustably in height.

The plough bodies situated at the other side of the plane of symmetry B—B are brought into a position as indicated in the Figures 1 and 2 by means of the hydraulic adjusting cylinders 32 and 53. The left frontmost plough bodies 20 are pivoted about the longitudinal centre line of the carrier 13 in the indicated position and the left plough body 20 of the rearmost part 2 about the shaft 45 in the indicated position. In the operating position in question, the soil cultivating machine in the form of a rotary harrow, which belongs to the plough and sees to a further crumbling of the soil, assumes the position as indicated in Figure 5, whereby the adjacent furrow slices, laterally displaced and turned by the two frontmost plough bodies and the rearmost plough body, are crumbled by means of the soil working elements of the soil working members 64 and are compressed by means of the packer roller, so that immediately material can be brought into the thus treated soil from the hopper 90 of the apparatus 91 for bringing material, e.g. sowing seed, onto or into the soil.

The drive for the soil working members 64, which counter-rotate during operation, is effected via the above-described drive from the power take-off shaft of the tractor. In the above-indicated manner it is possible to carry out by means of the plough according to the invention in one operation both a primary and a secondary soil cultivation, all this in such a manner that immediately hereafter the soil can be sown. During operation, the left plane 69 fitted to the frame portion 62, in its position as indicated, sees to it that no soil is stowed into the open furrow (Figure 6). The other plate 69 passes over the already cultivated soil and, because the length of the lowermost arm 67 is less than that of the topmost arm 66, assumes a position as is indicated in Figure 6, whereby the plate stands practically vertical and can co-operate with the outermost soil working member 64 for a further crumbling and distribution of the soil, so that a proper link-up is obtained with the adjacent, already cultivated strip of soil.

At the end of the field, it is possible from the tractor to bring by means of the hydraulic adjusting cylinder 32 the frontmost two plough bodies 20 by pivoting about the longitudinal axis of the carrier 13 into the inoperative position and the other pair of frontmost plough bodies 20 into their operative position. A change from the operative position to the inoperative position for the plough bodies 20 of the rearmost part 2 of the plough can be effected from the tractor by means of the adjusting cylinder 53. Subsequently, the carrier beams 57, which constitute a parallelogram construction and carry the whole of crumbling device or rotary harrow 63 and the apparatus 91, can be brought into the position indicated in Figure 5 by dash lines by means of the hydraulic adjusting cylinder 95 from the tractor. Hereafter, it is possible, in a reciprocating operation of the plough, again to laterally displace three adjacent furrow slices, to cultivate them by means of the rotary harrow and finally to sow them. If the longitudinal side of a field is reached so that the tractor must go alongside a fence or a ditch, it is possible to turn the frame beam 4 by means of the pins 40 and 41 over 180° into the position indicated in Figure 2 by dash lines and, by pivoting a frame beam 7 about the shaft 6, to bring the plough bodies into a position as has been indicated by dash lines in Figure 2. It is then possible for the frontmost two plough bodies together with the rearmost right-hand plough body to work to the end of the field, and for the crumbling device 63 together with the apparatus 91 to assume a position wherein the carrier beams 57 extend at least substantially straight to the rear, so that the ploughed strip can be crumbled and sown.

In order to ensure that, during operation, the plough bodies at the front side can be adapted to the movements of the tractor—in which connection they are adapted to deviate against the action of the springs 30 about the shafts 15 by means of the screw spindle 28—it is possible to obtain at wish an adaption of the position of the plough bodies and of the spring tension. By means of the pivotably arranged arm 19 carrying a plough body 20 and the leaf springs 23 it is possible, if during operation a plough body hits upon an obstacle, for said plough body together with the arm to pivot upwardly about the shaft 18 against the action of the leaf spring 23 in order to discharge the obstacle or to move thereover, after which the plough body immediately returns into its desired operative position.

## Claims

1. A plough comprising a frame and a plurality of plough bodies (20) fitted thereto, said plough constituting a combination with a crumbling device (63) as well as a sowing machine (91), and which plough can be connected to a tractor in such a manner that, during operation, a tractor wheel is situated in the furrow, characterized in that the crumbling device (63) comprises a plurality of soil working members (64) which are arranged side by side in a row extending transverse to the direction of travel and which are adapted to rotate about upwardly directed axes, and in that the crumbling device (63) at the end of the row comprises a side screen (69), which by means of height adjustable arms (66, 67) can be brought to into a furrow, the arrangement being such, that an uppermost portion of the said side screen (69) is situated at least substantially vertical and in that in the highest position of the side screen a lower portion cooperates with the outermost soil working members (64).

2. A plough as claimed in Claim 1, characterized in that the arms (66, 67) constitute a pivoting quadrangle, the pivoting points of which comprise shafts (65) extending in the direction of travel, and in that the lowermost arm (67) of the pivoting quadrangle is shorter than the topmost one (66).

3. A plough as claimed in Claims 1 or 2, characterized in that the frame of the crumbling device (63) comprises a frame portion (62) which extends transverse to the direction of travel and which by means of a parallelogram construction (57) is connected with the frame of the plough.

4. A plough as claimed in Claim 3, characterized in that the frame portion (62) comprises the drive for the soil working members (64), the shaft of one soil working member situated near the ends being extended upwardly and reaching to into a gear box (71), part of which is pivotable with the parallelogram constructin (57), and in that the drive for the soil working members (64) comprises a second gear box (76) which is arranged on the frame carrying the plough bodies (20) and part of which is pivotable with the parallelogram construction (57), and in that a horizontally extending shaft of a conical gear transmission is pivotable with the gear box.

5. A plough as claimed in any one of the preceding claims, characterized in that it comprises a portion (1) situated in front of the tractor as well as a portion (2) situated therebehind, the frontmost portion (1) being provided with plough bodies (20) which together with at least one plough body (20) at the rearmost portion (2) cultivate adjoining strips of soil.

6. A plough as claimed in Claim 5, characterized in that a frontmost plough body (20) is arranged pivotably to the frame about an upwardly directed shaft (15), so that, during operation, it can adapt itself to the movements of the tractor.

7. A plough as claimed in Claim 5 or 6, characterized in that the frame comprises an upwardly directed pivot shaft (38), by means of which at least one plough body (20) is displaceable from the one side of the plane of symmetry to the other side of the plane of symmetry.

8. A plough as claimed in any one of the preceding Claims 5—7, characterized in that the portion (1) arrangeable in front of the tractor is in top view, V-shaped in that in V-shape arranged frame beams (7) which plough bodies (20) are arranged symmetrically relative to a plane of symmetry (B—B) through a longitudinal centre line of the tractor, and in that the frame beams (7) are arranged at a cross-beam (4), relative to which they are pivotable over ±180° about an upwardly extending shaft (6).

9. A plough as claimed in Claim 8, characterized in that in the V-shaped arrangement of the frame beams (7) the point of the V is directed rearwardly and is situated near the plane of symmetry (B—B) through the longitudinal axis of the tractor.

10. A plough as claimed in any one of the preceding claims, characterized in that each plough body (20) is pivotable against spring action relative to a carrier about an upwardly directed shaft (15) and a continuous adjustment is provided for an adjustment of the spring pressure and adjustment of the plough body about the pivot shaft (15).

11. A plough as claimed in any one of the preceding Claims 5—10, characterized in that the portion (2) at the rear side of the tractor is provided with two adjacent plough bodies (20) which are situated symmetrically relative to the plane of symmetry (B—B) through the longitudinal centre line of the tractor.

12. A plough as claimed in any one of Claims 8—11, characterized in that the plough bodies (20) situated at one side of the plane of symmetry (B—B) are pivotable about an at least substantially horizontal shaft (12, 45) extending in the direction of travel and can be brought into an inoperative position.

13. A plough as claimed in Claim 12, characterized in that the plough bodies (20) at the rearmost portion (2) of the plough are each pivotable about a shaft (45), which is situated in front of the plough bodies.

14. A plough as claimed in any one of Claims 5—13, characterized in that the respective portions (1, 2) of the plough are provided with a three-point hitch attachment for applying to a lifting device at the front side, respectively rear side, of the tractor.

**Patentansprüche**

1. Pflug mit einem Gestell und einer Vielzahl daran angebrachter Pflugkörper (20), wobei der Pflug eine Einheit mit einer Krümelvorrichtung (63) und einer Sämaschine (91) bildet und der Pflug mit einem Traktor derart gekoppelt werden kann, daß bei Arbeitsfahrt ein Traktorrad in einer Furche läuft, dadurch gekennzeichnet, daß die Krümelvorrichtung (63) eine Vielzahl von Bodenbearbeitungswerkzeugen (64) aufweist, die in einer quer zur Arbeitsfahrtrichtung liegenden Reihe nebeneinander angeordnet und die um aufwärts gerichtete Achsen rotierend ausgebildet sind, und daß die Krümelvorrichtung (63) am Ende der Reihe einen Seitenschild (69) aufweist, das durch einen höhenverstellbaren Arm (66, 67) in die Furche abgesenkt werden kann, wobei die Anordnung so getroffen ist, daß ein oberer Abschnitt des Seitenschildes (69) wenigstens im wesentlichen vertikal liegt und in der höchsten Stellung des Seitenschildes ein unterer Abschnitt mit dem äußeren Bodenbearbeitungswerkzeug (64) zusammenwirkt.

2. Pflug nach Anspruch 1, dadurch gekennzeichnet, daß die Arme (66, 67) ein Gelenkviereck bilden, dessen Gelenkpunkte in Arbeitsfahrtrichtung sich erstreckende Wellen (65) aufweisen, und der unterste Arm (67) des Gelenkvierecks kürzer ist als der oberste Arm (66).

3. Pflug nach Anspruch 1 oder 2, dadurch gekennzeichnet, daß der Rahmen der Krümelvorrichtung (68) einen quer zur Arbeitsfahrtrichtung liegenden Rahmenteil (62) aufweist, der über eine Parallelogrammanordnung (57) mit dem Pfluggestell verbunden ist.

4. Pflug nach Anspruch 3, dadurch gekennzeichnet, daß der Rahmenteil (62) den Antrieb für die Bodenbearbeitungswerkzeuge (64) aufweist, wobei sich eine Welle einer der im Endbereich liegenden Bodenbearbeitungswerkzeuge aufwärts bis in einen Getriebekasten (71) erstreckt, der mit einem Teil schwenkbar mit der Parallelogrammanordnung (5) verbunden ist, und daß der Antrieb für die Bodenbearbeitungswerkzeuge (64) einen zweiten Getriebekasten (76) aufweist, der auf dem die Pflugkörper (20) tragenden Gestell angeordnet ist und der mit einem Teil schwenkbar mit der Parallelogrammanordnung (57) verbunden ist, und daß ein sich horizontal strekkende Welle eines Kegelradgetriebes mit dem Getriebekasten schwenkbar ist.

5. Pflug nach einem der vorhergehenden Ansprüche, dadurch gekennzeichnet, daß er einen vorne am Traktor angeordneten Abschnitt (1) und einen hinten am Traktor angeordneten Abschnitt (2) aufweist, wobei am vorderen Abschnitt (1) Pflugkörper (20) vorgesehen sind, die zusammen mit wenigstens einem Pflugkörper (20) des hinteren Abschbnitts (2) benachbarte Bodenstreifen bearbeiten.

6. Pflug nach Anspruch 5, dadurch gekennzeichnet, daß ein vorderer Pflugkörper (20) um eine aufwärts gerichtete Welle (15) zum Rahmen verschwenkbar liegt, so daß er sich bei Arbeitsfahrt an die Bewegungen des Traktors anpassen kann.

7. Pflug nach Anspruch 5 oder 6, dadurch gekennzeichnet, daß der Rahmen eine aufwärts gerichtete Schwenkwelle (38) aufweist, durch welche wenigstens ein Pflugkörper (20) von der einen Seite der Symmetrieebene zur anderen Seite der Symmetrieebene verlagerbar ist.

8. Pflug nach einem der vorhergehenden Ansprüche, dadurch gekennzeichnet, daß der vorne am Traktor angeordnete Abschnitt (1)—in Draufsicht—V-Form hat, in der in V-Form angeordnete Rahmenträger (7) mit Pflugkörpern (20) symmetrisch zu einer Symmetrieebene (B—B) durch eine Längsmittellinie des Traktors angeordnet liegen und die Rahmenträger (7) an einem Querträger (4) angeordnet sind, zu dem sie um eine aufwärts verlaufende Welle (6) über ±180 Grad Schwenkbar sind.

9. Pflug nach Anspruch 8, dadurch gekennzeichnet, daß die Spitze des V's der V-förmigen Anordnung der Rahmenträger (7) nach hinten gerichtet ist und nahe der Symmetrieebene (B—B) liegt, die durch die Längsmittellinie des Traktors verläuft.

10. Pflug nach einem der vorhergehenden Ansprüche, dadurch gekennzeichnet, daß jeder Pflug-körper (20) relativ zu einem Träger um eine aufwärts gerichtete Welle (15) gegen eine Federkraft verschwenkbar ist und zur Einstellung der Federkraft und zur Einstellung des Pflugkörpers um die Schwenkwelle (15) ein kontinuierliche einstellende Einstellvorrichtung vorgesehen ist.

11. Pflug nach einem der vorhergehenden Ansprüche 5 bis 10 dadurch gekennzeichnet, daß der hinten am Traktor angeordnete Abschnitt (2) mit zwei nebeneinanderliegenden Pflugkörpern (20) versehen ist, die zu einer durch die Längsmittellinie jedes Traktors verlaufenden Symmetrieebene (B—B) symmetrisch liegen.

12. Pflug nach einem der Ansprüche 8 bis 11, dadurch gekennzeichnet, daß die Pflugkörper (20) auf der einen Seite der Symmetrieebene (B—B) um eine im wesentlichen horizontale, sich in Arbeitsfahrtrichtung erstreckende Welle (12, 45) verschwenkbar und in eine Außerbetriebsstellung überführbar ist.

13. Pflug nach Anspruch 12, dadurch gekennzeichnet, daß jeder Pflugkörper (20) des hinteren Abschnitts (2) des Pfluges um eine vor dem Pflugkörper liegende Welle (45) verwenkbar ist.

14. Pflug nach einem der Ansprüche 5 bis 13, dadurch gekennzeichnet, daß die jeweiligen Abschnitte (1, 2) des Pfluges mit einer Dreipunktkupplung zum Anschluß an die Hebevorrichtung an dem vorderen bzw. hinteren Ende des Traktors versehen sind.

## Revendications

1. Charrue comprenant un chassis et une pluralité de corps de charrue (20) montés sur ce chassis, ladite charrue constituant une combinaison avec un dispositif brise-mottes (63) ainsi qu'avec un semoir (91), ladite charrue pouvant être reliée à un tracteur de telle manière que, pendant le travail, une roue du tracteur est située dans le sillon, caractérisée en ce que le dispositif brise-mottes (63) comprend une pluralité d'organes (64) de travail du sol qui sont disposés côte-à-côte en une rangée s'étendant transversalement au sens de marche et qui sont adaptés pour tourner autour d'axes s'étendant vers le haut, et en ce que le dispositif brise-mottes (63) à l'extrémité de la rangée comprend un écran latéral (69) pouvant être abaissé dans un sillon au moyen de bras (66, 67) réglables en hauteur, la disposition étant telle qu'une partie sommitale dudit écran latéral (69) est située au moins sensiblement verticalement et en ce que dans la position la plus haute de l'écran latéral une partie inférieure coopère avec les organes (64) de travail du sol situés le plus à l'extérieur.

2. Charrue selon la revendication 1, caractérisée en ce que les bras (66, 67) constituent un quadrilatère pivotant dont les points d'articulation comprennent des arbres (65) s'étendant dans le sens de marche, et en ce que le bras le plus bas (67) du quadrilatère pivotant est plus court que le bras le plus haut (66).

3. Charrue selon la revendication 1 ou 2, caractérisée en ce que le chassis du dispositif brise-mottes (63) comprend une partie de chassis (62) qui s'étend transversalement au sens de marche et qui est reliée au chassis de la charrue au moyen d'une structure en parallèlogramme (57).

4. Charrue selon la revendication 3, caractérisée en ce que la partie de chassis (62) comprend le mécanisme d'entraînement des organes (64) de travail du sol, l'arbre d'un organe de travail du sol situé près des extrémités étant prolongé vers le haut et aboutissant dans une boîte d'engrenages (71) dont une partie est pivotante avec la structure en parallèlogramme (57), et en ce que le mécanisme d'entraînement pour les organes (64) de travail du sol comprend une deuxième boîte d'engrenages (76) qui est disposé sur le chassis portant les corps de charrue (20), et dont une partie est pivotante avec la structure en parallélogramme (57), et en ce qu'un arbre s'étendant horizontalement d'une transmission d'engrenages coniques est pivotant avec la boîte d'engrenages.

5. Charrue selon l'une quelconque des revendications précédentes, caractérisée en ce qu'elle comprend une partie (1) située en avant du tracteur ainsi qu'une partie (2) située derrière le tracteur, la partie antérieure (1) étant munie de corps de charrue (20) lesquels, conjointement avec au moins un corps de charrue (20) sur la partie postérieure (2), cultivent des bandes de sol adjacentes.

6. Charrue selon la revendication 5, caractérisés en ce qu'un corps de charrue (20) situé tout à l'avant est monté pivotant par rapport au chassis autour d'un arbre (15) dirigé vers le haut, de telle manière qu'au cours du travail il puisse s'adapter aux mouvements du tracteur.

7. Charrue selon la revendication 5 ou 6, caractérisée en ce que le chassis comporte un arbre de pivotement (38) dirigé vers le haut, au moyen duquel au moins un corps de charrue (20) peut s'écarter de part et d'autre du plan de symétrie.

8. Charrue selon l'une quelconque des revendications 5—7 précédentes, caractérisée en ce que la partie (1) pouvant être montée à l'avant du tracteur est, en étant vue de dessus, en forme de V, en ce que des poutres de chassis (7) disposées en forme de V avec des corps de charrue (20) sont disposées symétriquement par rapport à un plan de symétrie (B—B) passant par un axe longitudinal médian du tracteur, et en ce que les poutres de chassis (7) sont disposées sur une poutre transversale (4) par rapport à laquelle elles peuvent pivoter sur ±180° autour d'un arbre (6) s'étendant vers le haut.

9. Charrue selon la revendication 8, caractérisée en ce que, dans la disposition en forme de V des poutres de chassis (7), la pointe du V est dirigée vers l'arrière et est située près du plan de symétrie (B—B) passant par l'axe longitudinal du tracteur.

10. Charrue selon l'une quelconque des revendications précédentes, caractérisée en ce que chaque corps de charrue (20) est pivotant en s'opposant à l'action d'un ressort, par rapport à un support, autour d'un arbre (15) dirigé vers le haut, un réglage continu étant prévu pour régler la pression du ressort et pour régler le pivotement du corps de charrue autour de l'arbre (15) de pivotement.

11. Charrue selon l'une quelconque des revendications 5—10 précédentes, caractérisée en ce que la partie (2) à l'arrière du tracteur est munie de deux corps de charrue (20) adjacents qui sont situés symètriquement par rapport au plan de symètrie (B—B) passant par l'axe longitudinal du tracteur.

12. Charrue selon l'une quelconque des revendications 8—11, caractérisée en ce que les corps de charrue (20) situés sur un côté du plan de symétrie (B—B) sont pivotants autour d'un arbre (12, 45) qui est tout au moins sensiblement horizontal et s'étend dans le sens de marche, ces corps de charrue pouvant être amenés en une position inopérante.

13. Charrue selon la revendication 12, caractérisée en ce que les corps de charrue (20) sur la partie postérieure (2) de la charrue sont chacun pivotants autour d'un arbre (45) qui est situé en avant des corps de charrue.

14. Charrue selon l'une quelconque des revendications 5—13, caractérisée en ce que les parties respectives (1, 2) de la charrue sont munies d'un dispositif d'attelage en trois points pour les relier à un dispositif de relevage, respectivement à l'avant et à l'arrière du tracteur.

Fig.1

FIG. 2

FIG.3

FIG.4

FIG.5

FIG.6

Fig. 7

Fig. 8